# EUROPEAN PATENT SPECIFICATION

(11) **EP 4 478 346 B1**
(45) Date of publication and mention of the grant of the patent: **05.08.2026**
(21) Application number: 23179175.7
(22) Date of filing: 14.06.2023
(51) Int. Cl.: G10D 13/02, F16M 13/02, G10D 13/10

(54) **DRUM FRAME CLAMPING STAND**
SPANNSTÄNDER FÜR TROMMELRAHMEN
SUPPORT DE SERRAGE DE CADRE DE TAMBOUR

(43) Date of publication of application: 18.12.2024
(73) Proprietor: Liao, Tsun-Chi, Taichung City (TW)
(72) Inventor: Liao, Tsun-Chi, Taichung City (TW)
(74) Representative: 2K Patent Partnerschaft mbB

(56) References cited:
- US-A- 5 684 258
- US-A1- 2010 254 559
- US-A1- 2012 049 025

## Description

### FIELD OF THE INVENTION

The present invention relates to a drum frame clamping stand, and particularly relates to an assembly and disassembly structure of a drum frame clamping stand.

### BACKGROUND OF THE INVENTION

A drum frame clamper is mainly used for clamping a drum frame of a drum musical instrument, so as to additionally arrange various musical instruments or auxiliary devices, such as a cymbal, a microphone, a mobile phone and a camera on the periphery of the drum musical instrument by utilizing the drum frame clamper.

US 5 684 258 A discloses a device holder for drums including a substantially L-shaped holder base having a horizontal mounting portion adapted for fastening to the counterhoop of a drum and a vertical holder portion with a cup-like head, a grooved cone supported on a spring in the cup-like head and secured to the cup-like head by an eye-end screw and a wing nut to hold a link and a device on the link, and a curved clamping plate turned about a pivot on the vertical holder portion of the holder base and adjustably fixed to the holder base by a screw bolt and a wing nut to secure the horizontal mounting portion of the holder base to the counterhoop of the drum.

US 6,344,605 B1 discloses a drum frame clamper having an L-shaped fixed clamping block, a movable clamping block, and an adjusting stud, wherein the movable clamping block can be driven to rotate relative to the fixed clamping block by means of the rotation of the adjusting stud, so as to enable the movable clamping block to draw close to the fixed clamping block to be clamped on the drum frame.

For this conventional clamping structure, the L-shaped fixed clamping block is used for clamping a lower edge of the drum frame, the movable clamping block is used for clamping an upper edge of the drum frame, the L-shaped fixed clamping block is further provided with a locking and connecting structure, and various musical instruments or auxiliary devices can be erected on the locking and connecting structure. As the L-shaped fixed clamping block is used for clamping the lower edge of the drum frame, weights of various musical instruments or auxiliary devices can directly act on the adjusting stud, thereby resulting in that the adjusting stud is relatively unsmooth in rotation, and the adjusting stud is relatively easy to loosen and disengage from the clamping of the drum frame.

### SUMMARY OF THE INVENTION

A main object of the present invention is to disclose a drum frame clamping stand which is clamped and fixed on a drum frame. Weights of various musical instruments or auxiliary devices cannot directly act on a screw locking piece, so that the screw locking piece has improved smoothness in operation, and is not easy to generate noise interference, and the drum frame can be loosened or clamped as long as the screw locking piece is rotated, so as to meet the requirements of rapid assembly and disassembly.

In order to achieve the above object, the present invention provides a drum frame clamping stand used for being clamped and fixed on a drum frame as defined by claim 1. The drum frame clamping stand includes an upper clamping piece, a lower clamping piece and a screw locking piece, the upper clamping piece and the lower clamping piece are pivotally connected with each other through a rotary shaft, a driving part and a driven part are respectively formed on two sides of the rotary shaft by the upper clamping piece, and the driven part includes an upper clamping end positioned on the drum frame.

Moreover, the lower clamping piece includes an abutting surface and a fixing part, the fixing part includes a lower clamping end positioned below the drum frame, while the screw locking piece passes through the driving part in a screw locking manner and abuts against the abutting surface of the lower clamping piece, the spiral rotation of the screw locking piece can drive the driving part to move, and the upper clamping piece is rotated relative to the lower clamping piece, so as to enable the upper clamping end to draw close to the lower clamping end to clamp the drum frame. The invention is characterized in that the abutting surface of the lower clamping piece is curved; and the upper clamping piece is provided with a locking and connecting structure for arranging further musical instruments or auxiliary devices.

Accordingly, the locking and connecting structure is used for arranging various musical instruments or auxiliary devices. According to the present invention, the upper clamping piece is rotated relative to the lower clamping piece by taking the rotary shaft as an axis as long as the screw locking piece is rotated, the upper clamping end is closed to the lower clamping end to clamp the drum frame. As the upper clamping end of the upper clamping piece is positioned on the drum frame, the drum frame can share weights of various musical instruments or auxiliary devices arranged on the locking and connecting structure, and a force cannot be directly applied to the screw locking piece, so that the screw locking piece of the present invention is smooth in operation and not easy to generate noise interference, and the drum frame can be loosened or clamped as long as the screw locking piece is rotated, so as to meet the requirements of rapid assembly and disassembly.

### BRIEF DESCRIPTION OF THE DRAWINGS

Fig. 1 is a combined structural view of the present invention.
Fig. 2 is an exploded structural view of the present invention.
Fig. 3 is a schematic cross-sectional view of the present invention.
Fig. 4 is a schematic view of the use of the present invention.
Figs. 5A-5B are cross-sectional structural action views of clamping a drum frame according to the present invention.
Fig. 6 is a schematic view of erecting a radio device according to the present invention.

### DETAILED DESCRIPTION OF THE PREFERRED EMBODIMENTS

The technical contents, features and effects of the present invention will become apparent from the following detailed description of the preferred examples in conjunction with the accompanying drawings.

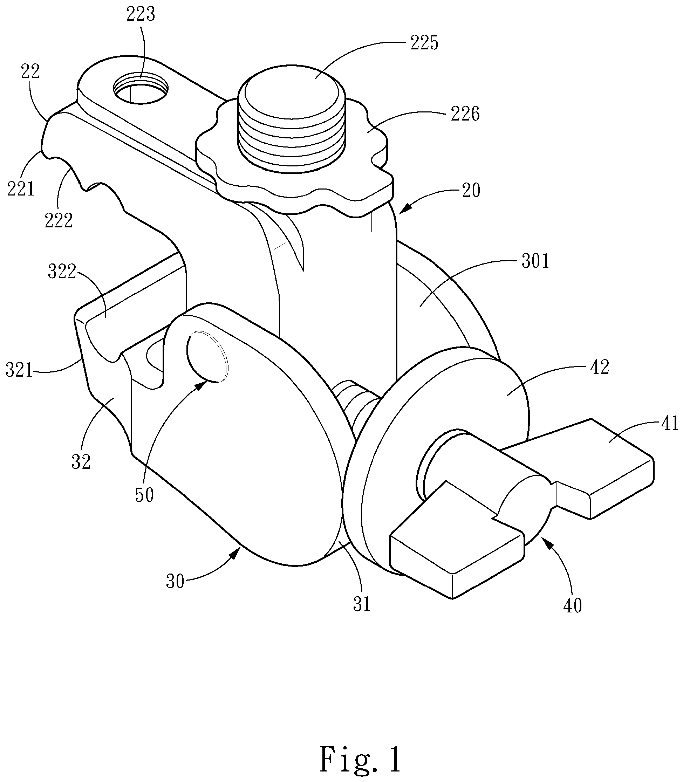

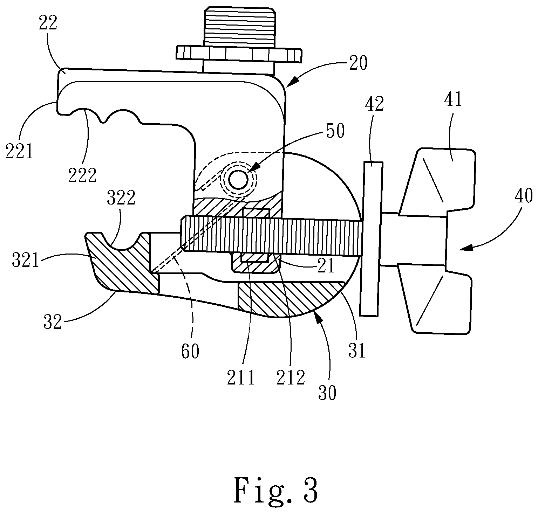

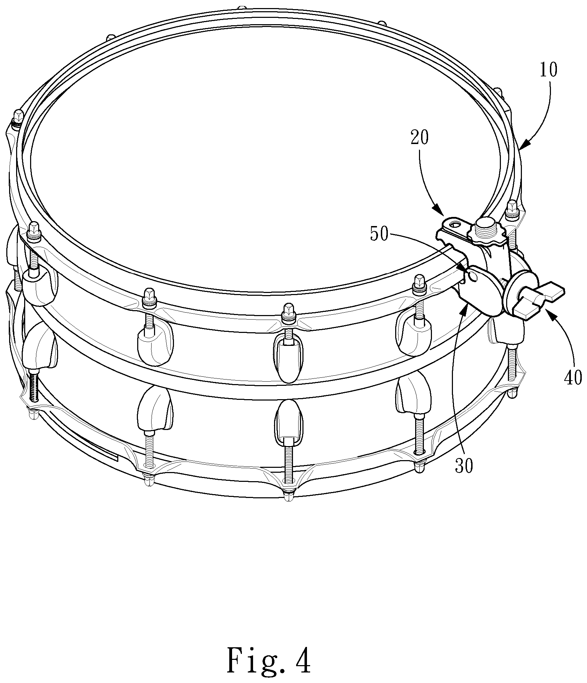

Referring to Fig. 1, Fig. 2, Fig. 3 and Fig. 4, the present invention provides a drum frame clamping stand used for being clamped and fixed on a drum frame 10. The drum frame clamping stand includes an upper clamping piece 20, a lower clamping piece 30 and a screw locking piece 40, wherein the upper clamping piece 20 and the lower clamping piece 30 are pivotally connected with each other through a rotary shaft 50, a driving part 21 and a driven part 22 are respectively formed on two sides of the rotary shaft 50 by the upper clamping piece 20, and the driven part 22 includes an upper clamping end 221 positioned on the drum frame 10.

The lower clamping piece 30 includes an abutting curved surface 31 and a fixing part 32, the fixing part 32 includes a lower clamping end 321 positioned below the drum frame 10, while the screw locking piece 40 passes through the driving part 21 in a screw locking manner and abuts against the abutting curved surface 31 of the lower clamping piece 30. In an example, the driving part 21 is embedded with a nut 211 non-rotated relative to the driving part 21, the driving part 21 is made of plastic steel to have a shock absorption capability, so as to effectively reduce noise interference, and the driving part 21 includes a through hole 212, the nut 211 is exposed via the through hole 212, and the screw locking piece 40 passes through the through hole 212 to be screwed into the nut 211. As the nut 211 is non-rotate relative to the driving part 21, the rotation of the screw locking piece 40 drives the driving part 21 to move through the nut 211. The upper clamping piece 20 is rotated relative to the lower clamping piece 30 by taking the rotary shaft 50 as an axis, the upper clamping end 221 is closed to the lower clamping end 321 to clamp the drum frame 10.

In implementation, the lower clamping piece 30 includes an accommodating groove 301 provided for the driving part 21 of the upper clamping piece 20 being placed into thereof, so that the upper clamping piece 20 and the lower clamping piece 30 are pivotally connected with each other bilateral-symmetrically to maintain the balance of the integral component. The screw locking piece 40 includes a knob head 41 and a pushing plate 42, the knob head 41 provides a finger gripping space to facilitate rotation of the screw locking piece 40, and the pushing plate 42 is used for abutting against the abutting curved surface 31 to improve the stability of rotating of the upper clamping piece 20 relative to the lower clamping piece 30.

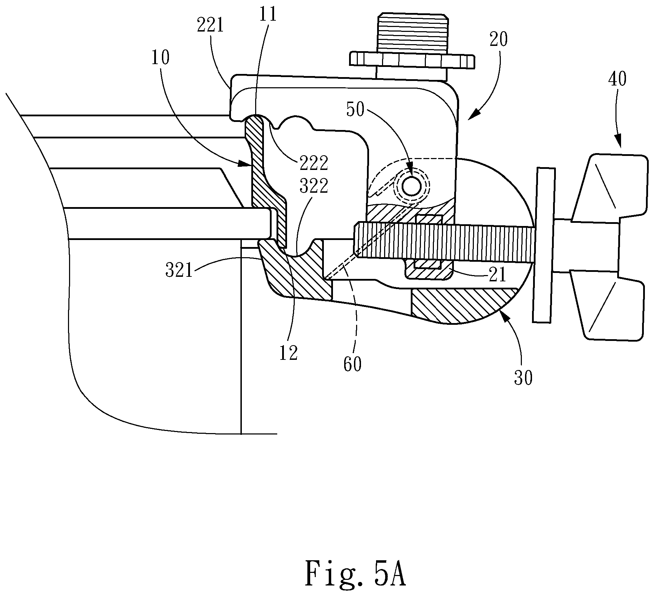

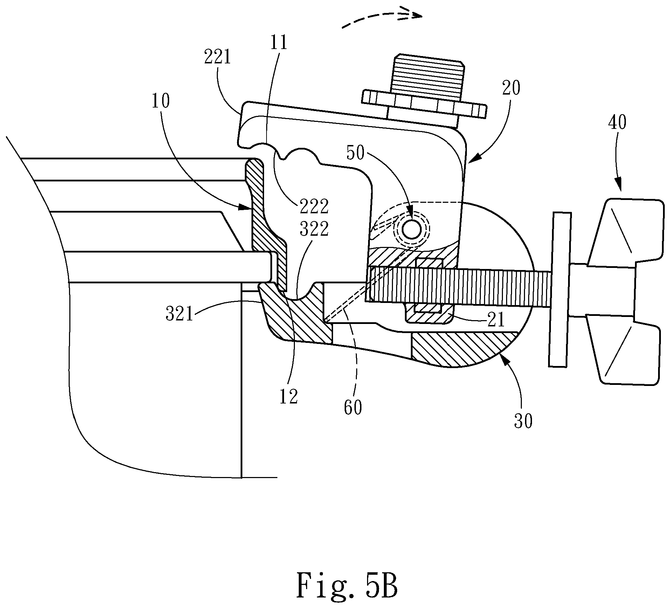

Referring also to Fig. 5A and Fig. 5B, in an example, the upper clamping end 221 includes an upper groove 222 for clamping an upper edge 11 of the drum frame 10, the lower clamping end 321 includes a lower groove 322 for clamping a lower edge 12 of the drum frame 10, the upper groove 222 and the lower groove 322 are securely buckled with the upper edge 11 and the lower edge 12 of the drum frame 10, respectively. In addition, for convenience in operation, the present invention further includes a return spring 60, wherein the return spring 60 is wound around the rotary shaft 50, and two ends of the return spring 60 abut against the lower clamping piece 30 and the upper clamping piece 20, respectively. When the screw locking piece 40 is unscrewed, the upper clamping end 221 and the lower clamping end 321 (as shown in Fig. 5B) are automatically opened by an elastic force of the return spring 60, thereby improving the convenience in use.

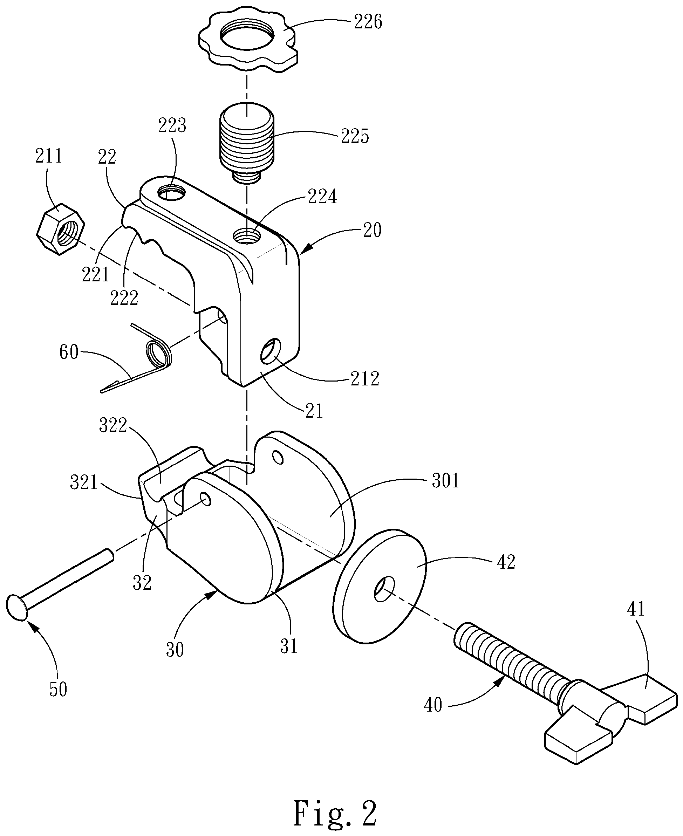

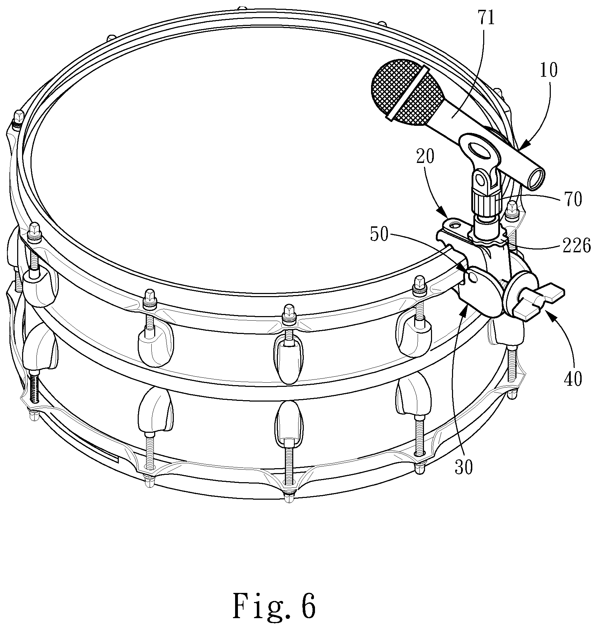

Furthermore, referring also to Fig. 2 and Fig. 6, the upper clamping piece 20 is provided with at least one locking hole 223, 224 facing upwards to serve as a locking and connecting structure for arranging various musical instruments or auxiliary devices, such as a cymbal, a microphone, a camera and a mobile phone. In an example, an adapter screw 225 with different outer diameters is screwed into the locking hole 224, the adapter screw 225 is locked with a liner ring 226 and a radio bracket 70, and a radio device 71, such as the microphone, can be erected on the radio bracket 70.

As described above, the present invention at least has the following advantages.
i) The drum frame can share weights of various musical instruments or auxiliary devices arranged on the locking and connecting structure, and a force cannot be directly applied to the screw locking piece, so that the screw locking piece of the present invention is smooth in operation and not easy to generate noise interference, and the drum frame can be loosened or clamped as long as the screw locking piece is rotated, so as to meet the requirements of rapid assembly and disassembly.
ii) The return spring is arranged, so that the upper clamping end and the lower clamping end can be automatically opened, thereby improving the convenience in use.
iii) Through the design that the driving part is embedded with the nut non-rotated relative to the driving part, the driving part can be made of plastic steel to have a shock absorption capability, so as to effectively reduce noise interference.

## Claims

1. A drum frame clamping stand used for being clamped and fixed on a drum frame (10), comprising:
an upper clamping piece (20);
a lower clamping piece (30), wherein the upper clamping piece (20) and the lower clamping piece (30) are pivotally connected with each other through a rotary shaft (50), a driving part (21) and a driven part (22) are respectively formed on two sides of the rotary shaft (50) by the upper clamping piece (20), the driven part (22) comprising an upper clamping end (221) positioned on the drum frame (10), the lower clamping piece (30) comprising an abutting surface (31) and a fixing part (32), the fixing part (32) comprising a lower clamping end (321) positioned below the drum frame (10); and
a screw locking piece (40), wherein the screw locking piece (40) passes through the driving part (21) in a screw locking manner and abuts against the abutting curved surface (31) of the lower clamping piece (30), such that spiral rotation of the screw locking piece (40) drives the driving part (21) to move, the upper clamping piece (20) is rotated relative to the lower clamping piece (30), and the upper clamping end (221) is closed to the lower clamping end (321) to clamp the drum frame (10),
**characterized in that**
the abutting surface (31) of the lower clamping piece (30) is curved; and
the upper clamping piece (20) is provided with a locking and connecting structure for arranging further musical instruments or auxiliary devices.

2. The drum frame clamping stand according to claim 1, wherein the driving part (21) is embedded with a nut (211) non-rotated relative to the driving part (21), and the driving part (21) comprises a through hole (212), the nut (211) is exposed via the through hole (212), and the screw locking piece (40) passes through the through hole (212) and is screwed onto the nut (211).

3. The drum frame clamping stand according to claim 1 or 2, wherein the lower clamping piece (30) comprises an accommodating groove (301), and the driving part (21) of the upper clamping piece (20) is placed into the accommodating groove (301).

4. The drum frame clamping stand according to one of the preceding claims, wherein the screw locking piece (40) comprises a knob head (41) and a pushing plate (42) for abutting against the abutting curved surface (31).

5. The drum frame clamping stand according to one of the preceding claims, wherein the upper clamping end (221) comprises an upper groove (222) for clamping an upper edge (11) of the drum frame (10), the lower clamping end (321) comprises a lower groove (322) for clamping a lower edge (12) of the drum frame (10).

6. The drum frame clamping stand according to one of the preceding claims, further comprising a return spring (60), wherein the return spring (60) is wound around the rotary shaft (50), and two ends of the return spring (60) respectively abut against the lower clamping piece (30) and the upper clamping piece (20).

7. The drum frame clamping stand according to one of the preceding claims, wherein the locking and connecting structure comprises at least one locking hole (223, 224) facing upwards.

8. The drum frame clamping stand according to claim 7, wherein an adapter screw (225) with different outer diameters is screwed into the locking hole (223, 224), the adapter screw (225) is locked with a liner ring (226) and a radio bracket (70), and a radio device (71) is erected on the radio bracket (70).

## Patentansprüche

1. Trommelrahmen-Klemmständer, der zum Festklemmen und Befestigen an einem Trommelrahmen (10) verwendet wird, umfassend:
ein oberes Klemmstück (20);
ein unteres Klemmstück (30), wobei das obere Klemmstück (20) und das untere Klemmstück (30) über eine Drehachse (50) schwenkbar miteinander verbunden sind, ein antreibendes Teil (21) und ein angetriebenes Teil (22) die jeweils an zwei Seiten der Drehachse (50) durch das obere Klemmstück (20) gebildet sind, wobei das angetriebene Teil (22) ein oberes Klemmende (221) umfasst, das am Trommelrahmen (10) positioniert ist, das untere Klemmstück (30) eine Anlagefläche (31) und ein Befestigungsteil (32) umfasst, wobei das Befestigungsteil (32) ein unteres Klemmende (321) umfasst, das unterhalb des Trommelrahmens (10) positioniert ist; und
ein Schraubverriegelungsstück (40), wobei das Schraubverriegelungsstück (40) das antreibende Teil (21) in einer Schraubverriegelungsanordnung durchsetzt und an der anliegenden gekrümmten Anlagefläche (31) des unteren Klemmstücks (30) anliegt, so dass eine Drehbewegung des Schraubverriegelungsstücks (40) das antreibendes Teil (21) zur Bewegung antreibt, das obere Klemmstück (20) relativ zum unteren Klemmstück (30) gedreht wird und das obere Klemmende (221) an das untere Klemmende (321) herangeführt wird, um den Trommelrahmen (10) zu klemmen,
**dadurch gekennzeichnet, dass**
die Anlagefläche (31) des unteren Klemmstücks (30) gekrümmt ist; und
das obere Klemmstück (20) mit einer Verriegelungs- und Verbindungskonstruktion zum Anbringen weiterer Musikinstrumente oder Zusatzvorrichtungen versehen ist.

2. Trommelrahmen-Klemmständer nach Anspruch 1, wobei in das antreibende Teil (21) eine Mutter (211) eingebettet ist, die relativ zum antreibenden Teil (21) nicht drehbar ist, und das antreibende Teil (21) ein Durchgangsloch (212) aufweist, wobei die Mutter (211) über das Durchgangsloch (212) freiliegt und das Schraubverriegelungsstück (40) das Durchgangsloch (212) durchsetzt und auf die Mutter (211) geschraubt ist.

3. Trommelrahmen-Klemmständer gemäß Anspruch 1 oder 2, wobei das untere Klemmst ück (30) eine Aufnahmenut (301) aufweist und das antreibendes Teil (21) des oberen Klemmstücks (20) in die Aufnahmenut (301) eingesetzt ist.

4. Trommelrahmen-Klemmständer nach einem der vorstehenden Ansprüche, wobei das Schraubverriegelungsstück (40) einen Drehknopf (41) und eine Druckplatte (42) zum Anlegen an die anliegende gekrümmte Fläche (31) aufweist.

5. Trommelrahmen-Klemmständer nach einem der vorstehenden Ansprüche, wobei das obere Klemmende (221) eine obere Nut (222) zum Klemmen einer Oberkante (11) des Trommelrahmens (10) aufweist, wobei das untere Klemmende (321) eine untere Nut (322) zum Klemmen einer Unterkante (12) des Trommelrahmens (10) aufweist.

6. Trommelrahmen-Klemmständer nach einem der vorstehenden Ansprüche, der ferner eine Rückstellfeder (60) umfasst, wobei die Rückstellfeder (60) um die Drehachse (50) gewickelt ist und zwei Enden der Rückstellfeder (60) jeweils an dem unteren Klemmst ück (30) und dem oberen Klemmstück (20) anliegen.

7. Trommelrahmen-Klemmständer nach einem der vorstehenden Ansprüche, wobei die Verriegelungs- und Verbindungskonstruktion mindestens ein nach oben gerichtetes Verriegelungsloch (223, 224) umfasst.

8. Trommelrahmen-Klemmständer nach Anspruch 7, wobei eine Adapter-Schraube (225) mit unterschiedlichen Außendurchmessern in das Verriegelungsloch (223, 224) eingeschraubt ist, die Adapter-Schraube (225) mit einer Unterlegscheibe (226) und einer Funkteilhalterung (70) verriegelt ist und ein Funkteil (71) auf der Funkteilhalterung (70) aufgestellt ist.

## Revendications

1. Support de serrage pour châssis de tambour, destiné à être serré et fixé sur un châssis de tambour (10), comprenant :
une pièce de serrage supérieure (20) ;
une pièce de serrage inférieure (30), dans laquelle la pièce de serrage supérieure (20) et la pièce de serrage inférieure (30) sont reliées entre elles de manière pivotante par un axe de rotation (50), une partie motrice (21) et une partie entraînée (22) sont formées respectivement sur deux côtés de l'axe de rotation (50) par la pièce de serrage supérieure (20), dans laquelle la partie entraînée (22) comprend une extrémité de serrage supérieure (221) positionnée sur le cadre de tambour (10), la pièce de serrage inférieure (30) comprend une surface d'appui (31) et une partie de fixation (32), dans laquelle la partie de fixation (32) comprend une extrémité de serrage inférieure (321) positionnée en dessous du cadre de tambour (10); et
une pièce de verrouillage à vis (40), dans laquelle la pièce de verrouillage à vis (40) traverse la partie motrice (21) selon un agencement de verrouillage à vis et vient en appui contre la surface d'appui incurvée (31) adjacente de la pièce de serrage inférieure (30), de sorte qu'un mouvement de rotation de la pièce de verrouillage à vis (40) entraîne la partie motrice (21) en déplacement, la pièce de serrage supérieure (20) tourne par rapport à la pièce de serrage inférieure (30) et l'extrémité de serrage supérieure (221) est rapprochée de l'extrémité de serrage inférieure (321) pour serrer le cadre de tambour (10),
**caractérisé en ce que**
la surface d'appui (31) de la pièce de serrage inférieure (30) est incurvée ; et
la pièce de serrage supérieure (20) est pourvue d'une structure de verrouillage et de liaison pour le montage d'autres instruments de musique ou de dispositifs auxiliaires.

2. Support de serrage pour cadre de tambour selon la revendication 1, dans lequel un écrou (211) est noyé dans la partie motrice (21), lequel écrou n'est pas rotatif par rapport à la partie motrice (21), et la partie motrice (21) présente un trou traversant (212), l'écrou (211) étant exposé à travers le trou traversant (212) et la pièce de verrouillage à vis (40) traversant le trou traversant (212) et étant vissée sur l'écrou (211).

3. Support de serrage pour cadre de tambour selon la revendication 1 ou 2, dans lequel la pièce de serrage inférieure (30) présente une rainure de logement (301) et la partie motrice (21) de la pièce de serrage supérieure (20) est insérée dans la rainure de logement (301).

4. Support de serrage pour cadre de tambour selon l'une quelconque des revendications précédentes, dans lequel la pièce de verrouillage à vis (40) présente un bouton rotatif (41) et une plaque de pression (42) destinée à venir en appui contre la surface incurvée (31) adjacente.

5. Support de serrage pour cadre de tambour selon l'une quelconque des revendications précédentes, dans lequel l'extrémité de serrage supérieure (221) présente une rainure supérieure (222) pour serrer un bord supérieur (11) du cadre de tambour (10), l'extrémité de serrage inférieure (321) présentant une rainure inférieure (322) pour serrer un bord inférieur (12) du cadre de tambour (10).

6. Support de serrage pour cadre de tambour selon l'une quelconque des revendications précédentes, comprenant en outre un ressort de rappel (60), le ressort de rappel (60) étant enroulé autour de l'axe de rotation (50) et deux extrémités du ressort de rappel (60) venant respectivement en appui contre la pièce de serrage inférieure (30) et la pièce de serrage supérieure (20).

7. Support de serrage pour cadre de tambour selon l'une quelconque des revendications précédentes, dans lequel la structure de verrouillage et de liaison comprend au moins un trou de verrouillage (223, 224) orienté vers le haut.

8. Support de serrage pour cadre de tambour selon la revendication 7, dans lequel une vis d'adaptation (225) ayant différents diamètres extérieurs est vissée dans le trou de verrouillage (223, 224), la vis d'adaptation (225) est verrouillée avec une rondelle (226) et un support d'élément radio (70), et un élément radio (71) est monté sur le support d'élément radio (70).
